# EUROPEAN PATENT SPECIFICATION

(11) **EP 0 530 339 B1**
(45) Date of publication and mention of the grant of the patent: **15.11.1995**
(21) Application number: 92906416.0
(22) Date of filing: 19.03.1992
(51) Int. Cl.: H04B 7/26, H04B 1/76

(54) **METHOD FOR IDENTIFYING A SUPERVISING SIGNAL AT A BASE STATION OF A MOBILE TELEPHONE SYSTEM**
VERFAHREN ZUR ERKENNUNG EINES ÜBERWACHUNGSSIGNALS IN EINER ORTSFESTEN STATION EINES MOBILEN FERNSPRECHSSYSTEMS
PROCEDE D'IDENTIFICATION D'UN SIGNAL DE SURVEILLANCE A UNE STATION DE BASE D'UN SYSTEME TELEPHONIQUE MOBILE

(30) Priority: 21.03.1991 FI 911381
(43) Date of publication of application: 10.03.1993
(73) Proprietor: NOKIA TELECOMMUNICATIONS OY, 02600 Espoo (FI)
(72) Inventor: SALO, Kauko, SF-90230 Oulu (FI)
(74) Representative: Tomlinson, Kerry John
(86) International application number: FI9200078
(87) International publication number: WO9217005

(56) References cited:
- EP-A- 0 164 108
- DE-A- 3 505 950
- US-A- 4 696 057
- US-A- 4 783 658

## Description

### Method for identifying a supervising signal at a base station of a mobile telephone system

### Field of the Invention

The invention relates to a method for identifying a supervising signal at a base station in a mobile telephone system, in which the quality of radio links between the base station and mobile radio stations is supervised by several supervising signals of different frequencies, wherein a supervising signal received at the base station and transmitted further by the mobile radio station is bandpass-filtered by a bandpass filter tuned to a desired supervising signal frequency, and the supervising signal is identified on the basis of the level of the filtered supervising signal.

### Background of the Invention

In the NMT (Nordic Mobile Telephone) system, the quality of the radio link between a base station and a mobile telephone is supervised by special supervising signals. The base station generates a supervising signal having a desired supervising signal frequency. The NMT system utilizes four supervising signal frequencies with spacings of 30 Hz. The base station transmits a supervising signal to the mobile telephone, which returns the supervising signal immediately to the base station, and the base station determines the quality of the used radio link, especially the signal-to-noise ratio, by means of the received supervising signal.

When a mobile station roams from the area of one base station to the area of another base station, that is, in so-called hand-over situations, for instance, the base station has to measure the field strength of a mobile station in communication with another base station in order to find the best possible base station for the hand-over operation. It is thereby important that the base station measures the transmission of the right mobile station. The right mobile station can be identified by means of the frequency of a supervising signal included in its transmission. For the identification it is enough that one knows whether the frequency is the right one of the four possibilities. In such hand-over situations, the field strengths are usually low, which makes the measurement difficult.

In an arrangement known from the prior art, a supervising signal from the receiver of the base station is applied through bandpass and highpass filters and control switches to a mixer which mixes the received supervising signal with an injection signal generated by the base station and having a frequency at a spacing of 60 Hz from the supervising signal to be received. The output signal of the mixer is applied to a bandpass filter of 60 Hz and further through rectifying means to a comparator circuit, in which the obtained dc voltage is compared with a preset reference voltage. If the received supervising signal is the right one, the dc voltage proportional to the signal exceeds the reference value and the output of the comparator circuit changes state. If the received supervising signal is not the right one, the rectified voltage does not exceed the value of the reference voltage and the state of the output of the comparator circuit remains unchanged.

In FI Patent Application 900619, a received supervising signal is applied directly, without mixing, to a narrow-band bandpass filter of adjustable bandwidth, preferably a so-called multipath filter. The medium frequency of this filter is preset to the supervising signal frequency to be received. Also in this arrangement the supervising signal is identified by comparing the filtered and rectified supervising signal level with a fixed reference voltage value.

When using the above-mentioned devices, the identification of the supervising signal is, however, difficult over inferior radio links (at low field strengths), because interference bursts occurring on the supervising signal band interfere with the level of the supervising signal to be measured and impair the reliability of the comparison of the reference signal level.

### Summary of the Invention

The object of the present invention is to provide a method which alleviates the above-described problem.

This is achieved by means of a method described in the introduction, which according to the invention is characterized in that the supervising signal is identified by comparing the level of the filtered supervising signal with the level of received noise.

By comparing the level of the supervising signal with the level of received noise, the difference between the right and the wrong supervising signal frequency is increased and the reliability of the identification is improved because if the supervising signal to be identified is the wrong one, it does not differ from the noise in the measurement. In practice, the received supervising signal is identified as the right one if its signal-to-noise ratio (S/N) exceeds a predetermined threshold value. A further advantage of the invention is that it can be realized by S/N ratio measuring means already existing at the base station.

### Brief Description of the Drawing

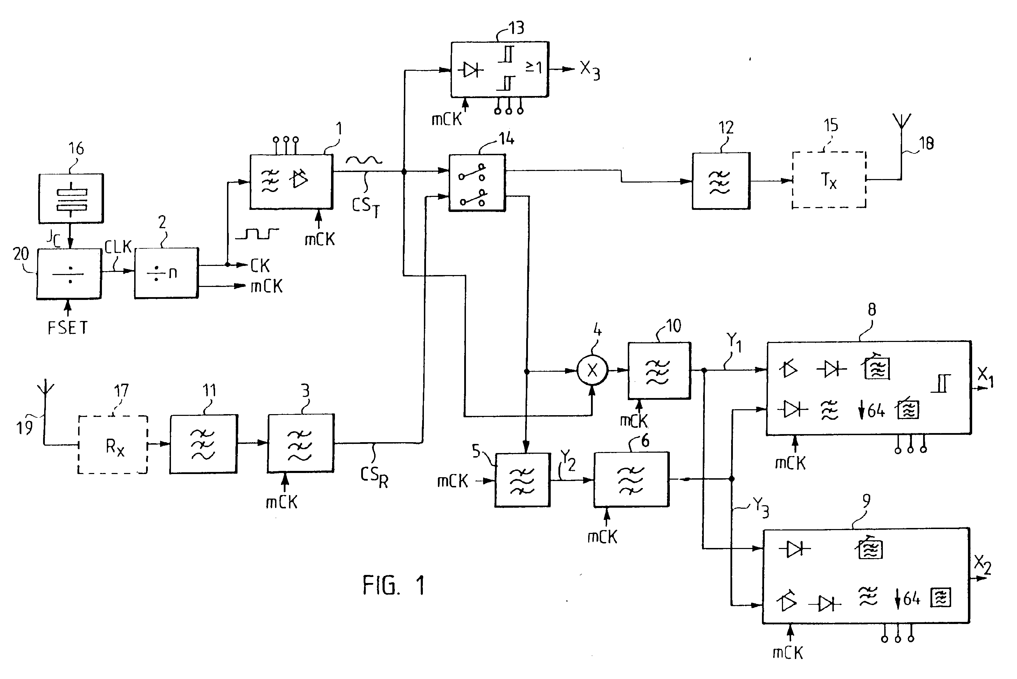

The invention will now be described in greater detail by means of embodiments with reference to the attached drawing, in which Figure 1 shows a block diagram of a base station portion required for processing supervising signals.

### Detailed Description of the Preferred Embodiments of the Invention

The NMT system is a so-called cellular telephone system in which the geographical area covered by the system is divided into smaller adjoining geographical areas or cells, each containing one or more fixed base stations in communication with mobile telephones located within the cell. The structure of the NMT system will not be described in more detail in this connection but the following publications are referred to in this respect:
[1] NMT Doc.4.1981 Technical specification for the base station equipment
[2] NMT Doc. 900-4 Technical specification for the base station equipment
[3] Addendum to NMT Doc. 900-4 Revised 1988-04-01.
[4] NMT Doc. 900-1.

The above specifications are also referred to regarding the signalling between the base station and the mobile telephone and especially regarding the supervising signals.

Referring to Figure 1, the base station comprises a clock signal source for the generation of supervising signals, such as a crystal oscillator 16, a divider circuit 20, a divider circuit 2, a lowpass filter block 1, a switching unit 14, a lowpass filter 12 and a level indicator 13. The generation of the supervising signal is not relevant to the invention, and FI Patent Application 900619 is referred to with respect to it. The generated baseband supervising signal is applied to a transmitter unit 15 at the base station for transmission through a transmitter antenna 18 to a mobile station.

The mobile station transmits the supervising signal it has received back to the same base station to supervise the quality of the link. The base station may also simultaneously measure the field strength. In some situations, such as in a hand-over situation, one or more of the other base stations may also simultaneously measure the field strength of the particular mobile station, thus using the supervising signal for the identification of the transmission of the mobile station. When the base station has not itself transmitted the supervising signal, it receives information about the frequency of the supervising signal to be identified from the mobile telephone network. The description below applies to both reception situations.

After the supervising signal transmitted by the mobile station has been received at the base station by a receiving antenna 19 and a receiver section 17 and mixed back to the baseband, it is filtered by a lowpass filter 11 which limits the upper end of the frequency band of the supervising signal to prevent folding in the later stages. The output signal of the filter 11 is filtered by a bandpass filter 3, which is preferably a Switched capacitor filter, to better distinguish the supervising signal from the noise. A supervising signal CS_{R} received from the filter 3 is applied through the switching unit 14 to a mixer 4 and a bandpass filter 5.

In the mixer 4 the received supervising signal CS_{R} is mixed with a transmitted supervising signal CS_{T} or with another injection signal having a desired supervising signal frequency, whereby the difference frequency is zero and only a noise signal and the sum frequency of the mixed signals, which in this case is two times the supervising signal frequency, are present at the output of the mixer. The sum frequency and the dc component are filtered out of the noise signal by a dc separation and a lowpass filter 10, which is preferably a Switched capacitor filter, thus obtaining a signal Y₁ proportional to the noise around the supervising signal frequency.

The bandpass filter 3 also applies the received supervising signal CS_{R} to the multipath-type bandpass filter 5 having an adjustable bandwidth, which is preferably less than 1 Hz. The bandpass filter 5 is controlled by said clock signal mCK, which determines its medium frequency. On the reception of the supervising signal, the filter is thus already adopted to the frequency of the right supervising signal, because the clock signal mCK is dependent on the frequency of the supervising signal. The bandpass filter 5 filters the noise out of the received supervising signal CS_{R}, resulting in a pure supervising signal Y₂. For a more detailed description of the bandpass filter 5, FI Patent Application 900619 is referred to.

The signal Y₂ is further bandpass-filtered by a bandpass filter 6, which is preferably a Switched capacitor filter having a broader passband than the filter 5, for filtering the harmonic frequencies created in the filter 5 out of the signal Y₂. The filter 6 is also controlled by the above-mentioned clock signal mCK.

For the identification of the supervising signal an output signal Y₃ of the filter 6 and the noise signal Y₁ are both applied to two signal processing blocks 8 and 9, in which the signal is amplified, rectified, lowpass-filtered, decimalized, integrated and finally dc voltages proportional to the signals are compared. If the difference between the dc voltages, that is, the signal-to-noise ratio (S/N) of the supervising signal is greater than a predetermined threshold value, the supervising signal to be measured is identified as the right one and the field strength measurement performed by the base station is accepted. The field strength measurement of the transmission of the mobile station is carried out by separate measuring means provided at the base station. The measuring means are not directly associated with the invention, and therefore will not be described more closely herein. In the blocks 8 and 9, all filter functions are preferably realized by Switched capacitor filters, which are controlled by the clock frequency mCK. The signal processing section can be realized in many different ways without deviating from the scope of the invention.

The drawing and the description related to it are only intended to illustrate the present invention. In its details, the method according to the present invention may vary within the scope of the attached claims.

## Claims

1. A method for identifying a supervising signal at a base station in a mobile telephone system, in which the quality of radio links between the base station and mobile radio stations is supervised by several supervising signals of different frequencies, wherein a supervising signal received at the base station is bandpass-filtered by a bandpass filter (3,5) tuned to a desired supervising signal frequency, and the supervising signal is identified on the basis of the level of the filtered supervising signal (Y₃), **characterized** in that the supervising signal is identified by comparing the level of the filtered supervising signal (Y₃) with the level of received noise (Y₁).

2. A method according to claim 1, **characterized** in that the supervising signal is identified as the right one when the S/N ratio of the received supervising signal exceeds a predetermined threshold value.

## Patentansprüche

1. Verfahren zum Identifizieren eines Überwachungssignals in einer Basisstation in einem mobilen Telefonsystem, in welchem die Qualität der Funkverbindungen zwischen der Basisstation und den mobilen Funkstationen mit mehreren Überwachungssignalen mit verschiedenen Frequenzen überwacht wird, wobei ein Überwachungssignal, das in einer Basisstation empfangen wird, einer Bandpaßfilterung mit einem Bandpaßfilter (3, 5) unterzogen, auf eine gewünschte Überwachungssignalfrequenz abgestimmt und das Überwachungssignal dann auf der Basis des Pegels des gefilterten Überwachungssignals (Y3) identifiziert wird,
dadurch gekennzeichnet,
daß das Überwachungssignal durch Vergleichen des Pegels des gefilterten Überwachungssignals (Y3) mit dem Pegel des empfangenen Rauschsignals (Y1) identifiziert wird.

2. Verfahren nach Anspruch 1,
dadurch gekennzeichnet,
daß das Überwachungssignal als richtiges Überwachungssignal identifiziert wird, wenn der Rauschabstand des empfangenen Überwachungssignals einen vorgegebenen Schwellenwert überschreitet.

## Revendications

1. Procédé d'identification d'un signal de surveillance à une station de base d'un système téléphonique mobile dans lequel la qualité des liaisons radio entre la station de base et les stations radio est surveillée par plusieurs signaux de surveillance de fréquences différentes, procédé dans lequel un signal de surveillance reçu à la station de base est filtré par un filtre passe-bas (3, 5) adapté à une fréquence de signal de surveillance souhaitée et dans lequel le signal de surveillance est identifié sur la base du niveau du signal de surveillance filtré (Y₃),
caractérisé en ce que le signal de surveillance est identifié en comparant le niveau du signal de surveillance filtré (Y₃) au niveau de bruit reçu (Y₁).

2. Procédé selon la revendication 1,
caractérisé en ce que le signal de surveillance est identifié comme étant le bon lorsque le rapport signal/bruit du signal de surveillance reçu dépasse une valeur de seuil prédéterminée.
